# EUROPEAN PATENT APPLICATION

(11) **EP 3 012 309 A1**
(43) Date of publication of application: **27.04.2016**
(21) Application number: 15166174.1
(22) Date of filing: 04.05.2015
(51) Int. Cl.: C09K 19/56, C09K 19/38, C09K 19/34, G02F 1/1337, G02F 1/1339, C09K 19/04

(54) **COMPOSITION FOR ALIGNING, DISPLAY PANEL AND METHOD OF MANUFACTURING SAME**

(30) Priority: 30.07.2014 KR 20140097165
(71) Applicant: Samsung Display Co., Ltd., Gyeonggi-do (KR)
(72) Inventor: Lim, Ho, 3101-1503 Suwon-si, Gyeonggi-do (KR); Kim, Sung-Yi, 35 Seongnam-si, Gyeonggi-do (KR); Kim, Tae-Min, 102-803 Seoul (KR); Kim, Tae-Hoon, 103-1002 Suwon-si, Gyeonggi-do (KR)
(74) Representative: Dr. Weitzel & Partner

(57) **Abstract**

A composition for aligning includes a macromolecular compound and a reactive mesogen. The macromolecular compound is formed by a condensation polymerization reaction of a dianhydride monomer, and a diamine monomer including a photo reactive group. Thus, the composition for aligning includes the reactive mesogen, so that the reactive mesogen is not included in a liquid crystal layer.

## Description

### BACKGROUND

### 1. Field

The inventive concept relates to a photo-alignment composition and a method of manufacturing a display panel using the same. More particularly, the inventive concept relates to a photo-alignment composition capable of improving a hardness of an alignment layer and an afterimage of a display panel and a method of manufacturing a display panel using the photo-alignment composition.

### 2. Description of the Related Art

Liquid crystal display apparatuses are one type of a flat panel display FPD, which are widely used. Examples of flat panel displays include, but are not limited to, liquid crystal displays ("LCD"), plasma display panels ("PDP") and organic light emitting displays ("OLED").

In a liquid crystal display apparatus, voltages are applied to liquid crystal molecules to adjust arrangements of the molecules, thereby changing the optical characteristics of a liquid crystal cell, such as birefringence, optical activity, dichroism and light scattering, to display an image.

The liquid crystal display apparatus includes a display panel and a backlight assembly. Liquid crystal molecules of the display panel need to be aligned in a direction to have uniform brightness and high contrast ratio.

Recently, a composition for aligning of liquid crystal molecules in a display panel (i.e., a composition for aligning), which includes a reactive mesogen as a side chain of the composition has been used to improve a transmissivity and a response speed of the liquid crystal apparatus, and so that a reactive mesogen is not included in a liquid crystal layer. Generally, the composition includes a polyimide main chain and a functional group combined with the polyimide main chain, and the functional group includes a reactive mesogen unit and a photo reactive group.

### BRIEF SUMMARY OF THE INVENTIVE CONCEPT

A composition for aligning including a compound including a photo reactive group, and a reactive mesogen capable of improving an afterimage is provided.

A display panel capable of improving an afterimage, the display panel is formed by using the composition for aligning including the reactive mesogen, so that the reactive mesogen is not included in a liquid crystal layer is also provided.

A method of manufacturing a display panel formed by using the composition for aligning including the compound including the photo reactive group, and the reactive mesogen through ODF (one drop filling) process is also provided.

### <Chemical Formula 2>

D-R3

### <Chemical Formula 3>

D-R4

R1 includes 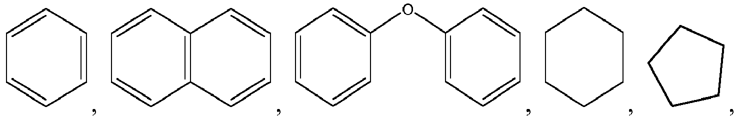 and

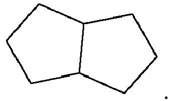

D is a diamine including an alkyl group having 2 to 20 carbon atoms, 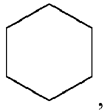 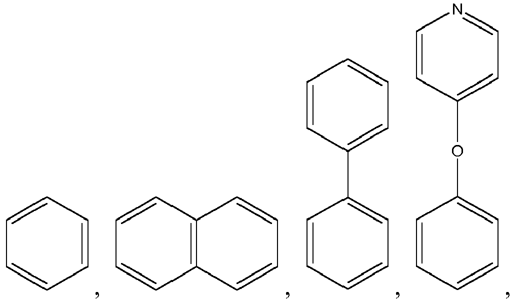 and 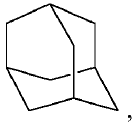 and at least two carbon atoms of D are substituted by nitrogen atoms.

R3 is -X-L1. X includes 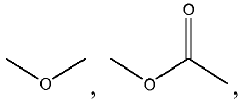 and 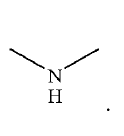 L1 includes a single bond, an alkyl group having 1 to 20 carbon atoms,

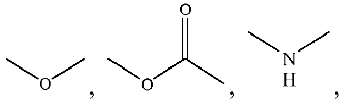

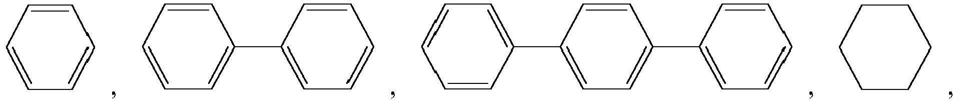

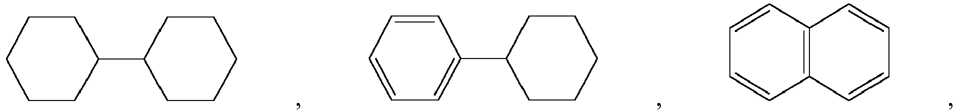

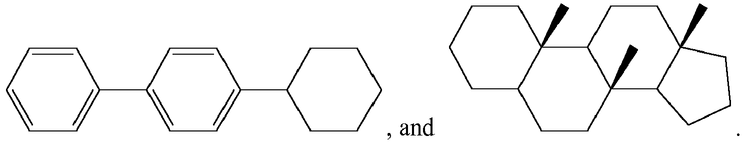

R4 is -X-L2. L2 includes 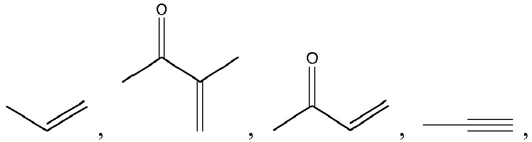 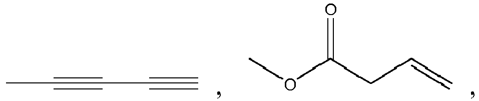 an epoxy group, 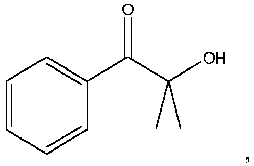 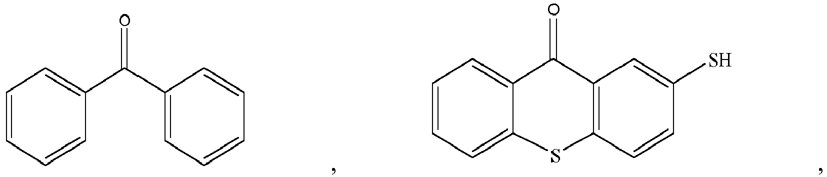 and

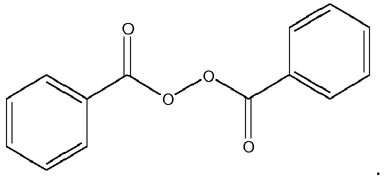

The first macromolecular compound may be formed by a condensation polymerization reaction of the dianhydride monomer, and the diamine monomer. The diamine monomer may include a vertical aligning diamine monomer represented by the Chemical Formula 2 and a photo reactive diamine monomer represented by the Chemical Formula 3. A molar ratio of the vertical aligning diamine monomer and the photo reactive diamine monomer may be about 7:3 to about 3:7.

An amount of the photo reactive monomer may be about 15mol% to about 35mol% based on a total mol forming the first macromolecular compound.

A second macromolecular compound may be formed by a condensation polymerization reaction of the dianhydride monomer represented by the Chemical Formula 1, and the diamine monomer represented by the Chemical Formula 2.

A molar ratio of the first macromolecular compound and the second macromolecular compound may be about 6:4 to about 8:2.

An amount of the reactive mesogen may be about 1wt% to about 20wt% based on a total weight of the first macromolecular compound and the second macromolecular compound.

The reactive mesogen may be represented by the following Chemical Formula 4.

### <Chemical Formula 4>

M2-M1-M3,

M1 may include

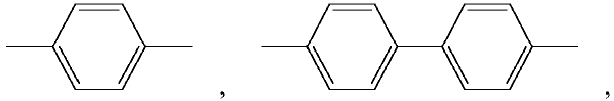

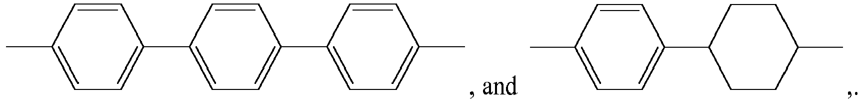

M2 may include

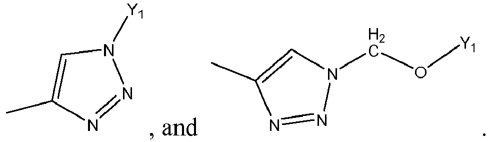

M3 may include 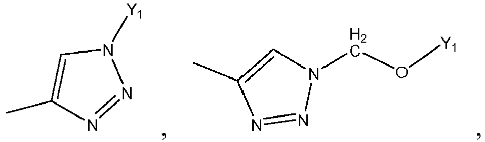 -O-Y2, and -O-(CH2)a-Y2. Y1 and Y2 may respectively include 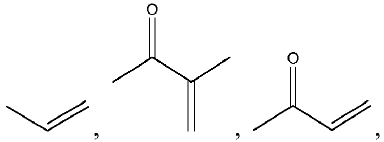 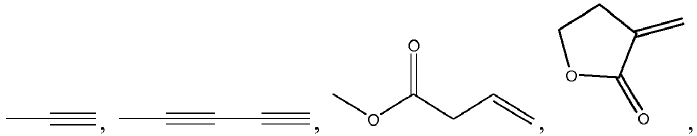 and an epoxy group. a may be 1 to 20.

At least one hydrogen atom of the benzene ring of M1 may be substituted by an alkyl group having 1 to 20 carbon atoms, an alkoxy group having 1 to 20 carbon atoms, a fluorine, a bromine, an iodine, an amine group and a cyano group.

In another aspect, a display panel includes a first substrate, a second substrate, an alignment layer, a mesogen and a liquid crystal layer. The second substrate faces the first substrate. The alignment layer is disposed on at least one surface of the first substrate and the second substrate. The alignment layer includes a first macromolecular compound including a first repeat unit represented by the following Chemical Formula 5 and a second repeat unit represented by the following Chemical Formula 6. The mesogen is disposed on the alignment layer, and combined with the second repeat unit. The liquid crystal layer is disposed between the first substrate and the second substrate.

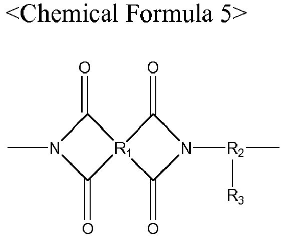

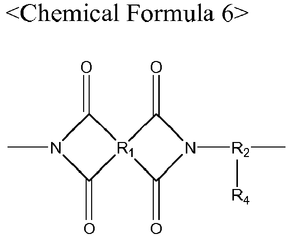

R1 includes

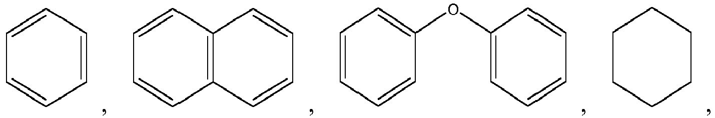

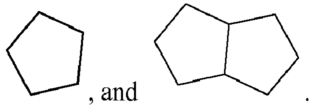

R2 includes an alkyl group having 1 to 20 carbon atoms,

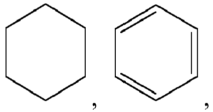

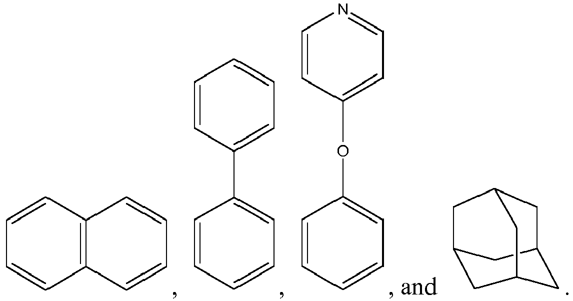

R3 is -X-L1. X includes 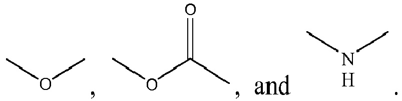 L1 includes a single bond, an alkyl group having 1 to 20 carbon atoms,

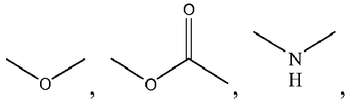

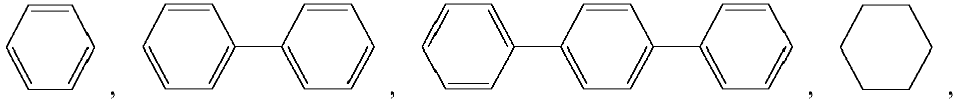

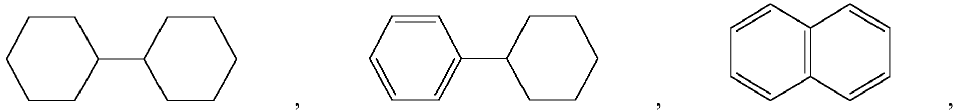

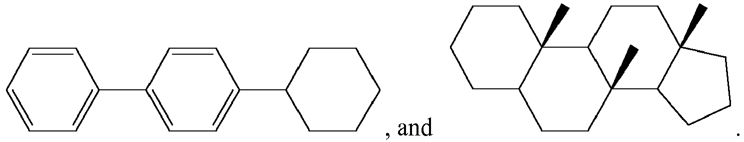

R4 is -X-L2. L2 includes 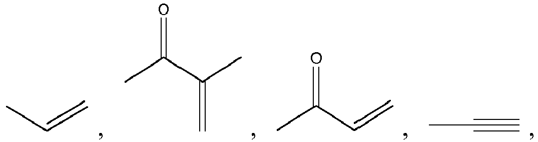 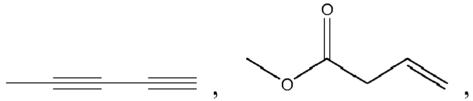 an epoxy group, 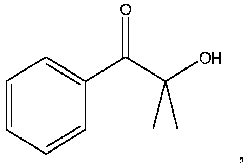 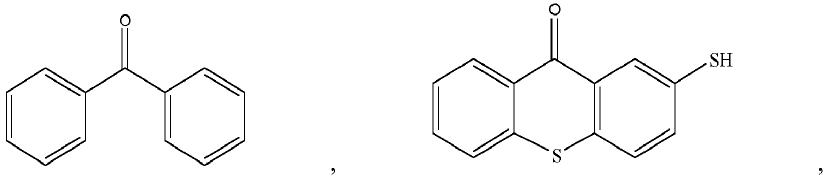 and

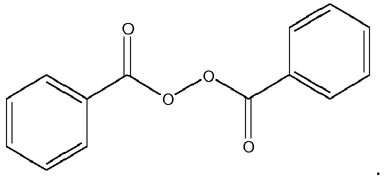

A molar ratio of the first repeat unit and the second repeat unit may be about 7:3 to about 3:7.

A second macromolecular compound may include the first repeat unit.

A molar ratio of the first macromolecular compound and the second macromolecular compound may be about 6:4 to about 8:2.

The alignment layer may include a lower alignment layer and an upper alignment layer. The lower alignment layer may be disposed on at least one surface of the first substrate and the second substrate. The upper alignment layer may be disposed on the lower alignment layer. A molar ratio of the second macromolecular compound of the lower alignment layer may be greater than a molar ratio of the first macromolecular compound of the lower alignment layer. A molar ratio of the first macromolecular compound of the upper alignment layer may be greater than a molar ratio of the second macromolecular compound of the lower alignment layer.

The mesogen may be represented by the following Chemical Formula 7.

### <Chemical Formula 7>

M2-M1-M3

M1 may include

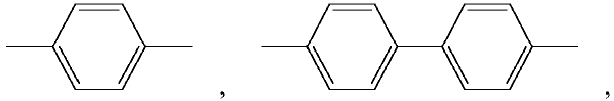

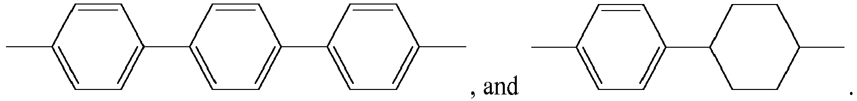

M2 may include

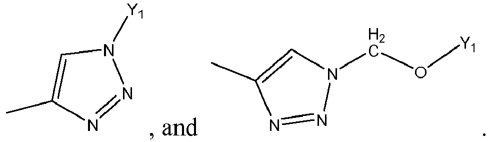

M3 may include 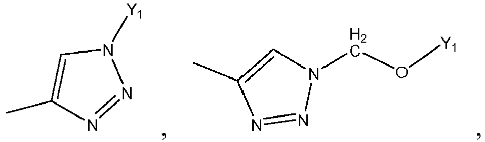 -O-Y2, and -O-(CH2)a-Y2. Y1 and Y2 may respectively include 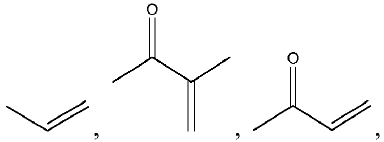 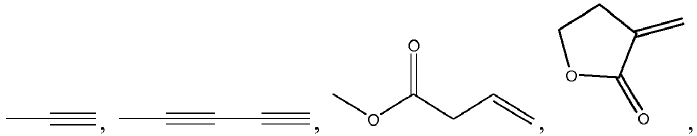 and an epoxy group. a may be 1 to 20.

At least one hydrogen atom of the benzene ring of M1 may be substituted by an alkyl group having 1 to 20 carbon atoms, an alkoxy group having 1 to 20 carbon atoms, a fluorine, a bromine, an iodine, an amine group and a cyano group.

Y1, Y2 and adjacent R4s may be combined with each other.

The first substrate may include a display area and a peripheral area surrounding the display area. A sealing member may be disposed on the alignment layer. The sealing member may be disposed on a border between the display area and the peripheral area.

The sealing member may surround a side surface of the liquid crystal layer.

The alignment layer may include a first alignment layer disposed between the first substrate and the liquid crystal layer, and a second alignment layer disposed between the second substrate and the liquid crystal layer.

The mesogen may be arranged with a pretilt angle to the first substrate and the second substrate.

In another aspect, a display panel includes a first substrate, a second substrate, an alignment layer and a liquid crystal layer. The second substrate faces the first substrate. The alignment layer is disposed on a surface of the first substrate and the second substrate. The alignment layer includes a third repeat unit represented by the following Chemical Formula 8 and a fourth repeat unit represented by the following Chemical Formula 9. The liquid crystal layer is disposed between the first substrate and the second substrate.

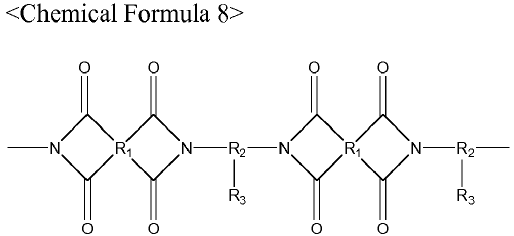

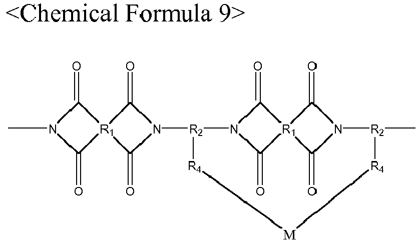

R1 includes 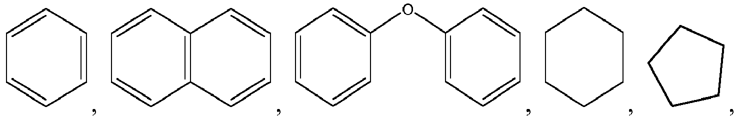 and

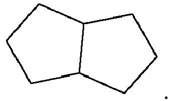

R2 includes an alkyl group having 1 to 20 carbon atoms,

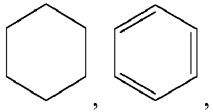

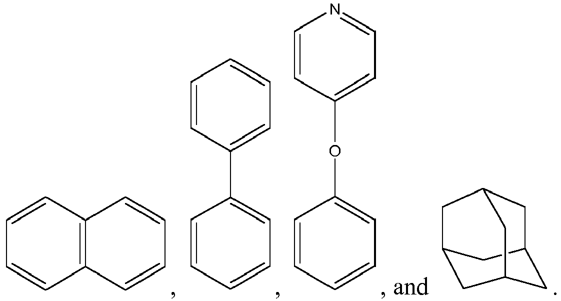

R3 is -X-L1. X includes 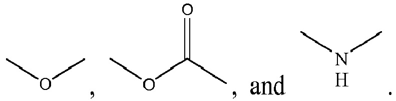 L1 includes a single bond, an alkyl group having 1 to 20 carbon atoms,

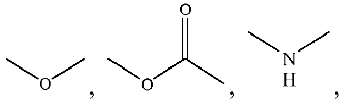

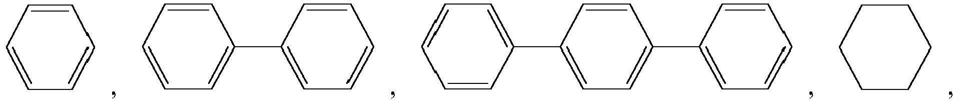

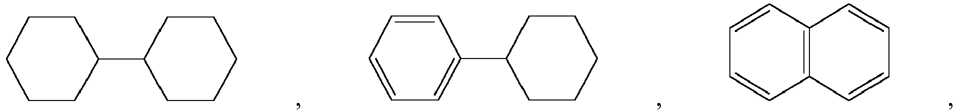

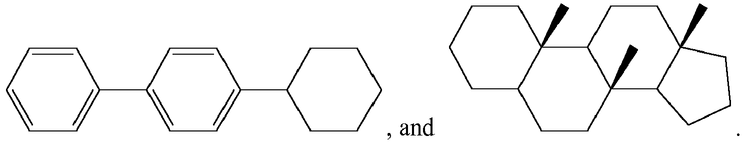

R4 is -X-L2. L2 includes 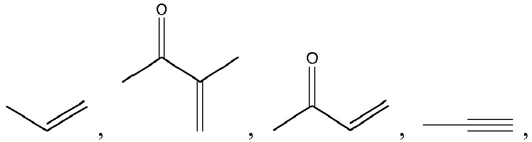 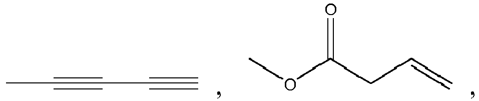 an epoxy group, 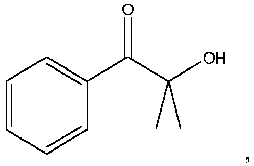 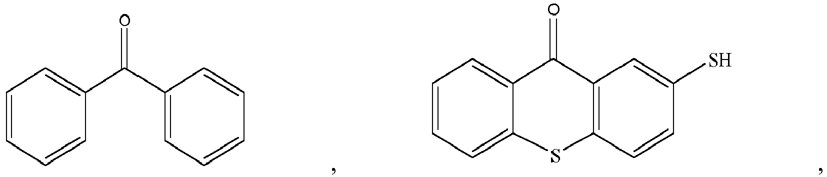 and

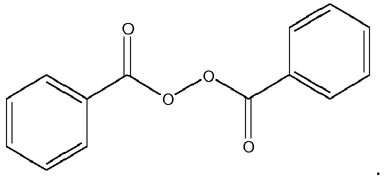

M is M2-M1-M3. M1 includes 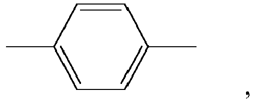 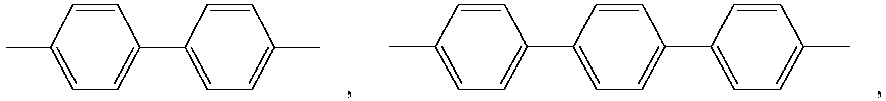 and 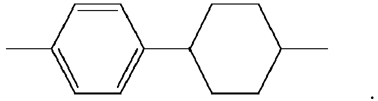 M2 includes 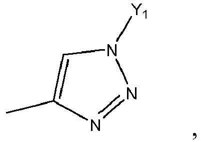 and 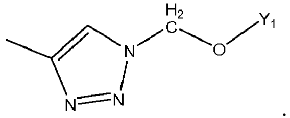 M3 includes 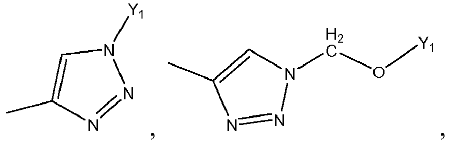 -O-Y2, and -O-(CH2)a-Y2. Y1 and Y2 respectively includes 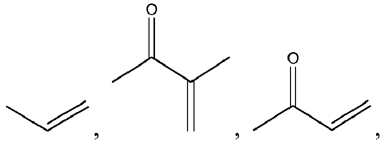 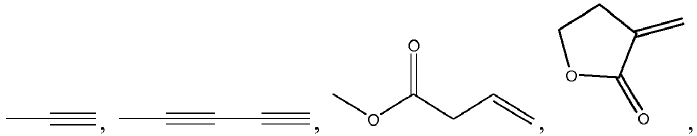 and an epoxy group. a is 1 to 20.

In another aspect, a method of manufacturing of a display panel is provided. A composition for aligning is coated on a first substrate to form an alignment layer. The composition includes a first macromolecular compound and a reactive mesogen. The first macromolecular compound is formed by a condensation polymerization reaction of a dianhydride monomer represented by the following Chemical Formula 1, and a diamine monomer represented by at least one of the following Chemical Formula 2 and the following Chemical Formula 3. The first substrate and the second substrate combines to form a liquid crystal layer. The alignment layer is heated. The first substrate is exposed to light for reacting the first macromolecular compound and the reactive mesogen.

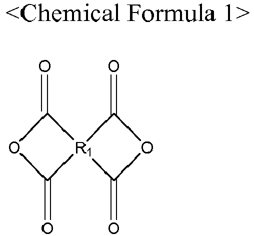

### <Chemical Formula 2>

D-R3

### <Chemical Formula 3>

D-R4

R1 includes 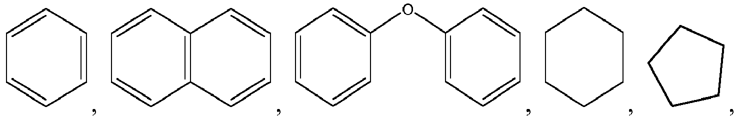 and

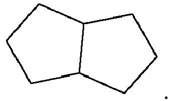

D is a diamine including an alkyl group having 2 to 20 carbon atoms, 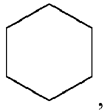 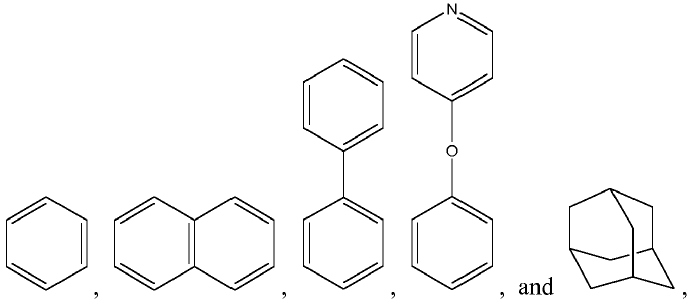 and at least two carbon atoms of D are substituted by nitrogen atoms.

R3 is -X-L1. X includes 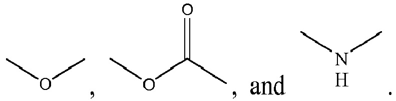 L1 includes a single bond, an alkyl group having 1 to 20 carbon atoms,

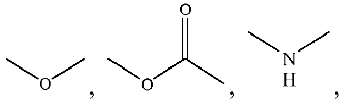

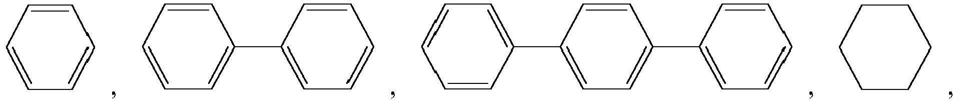

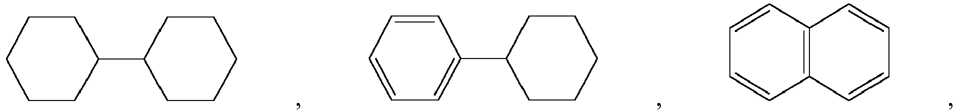

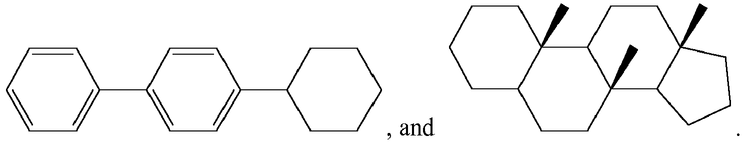

R4 is -X-L2. L2 includes 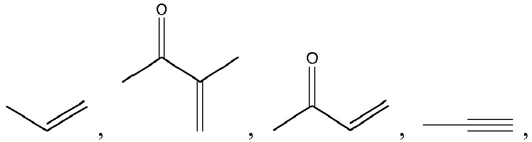 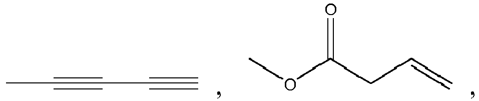 an epoxy group, 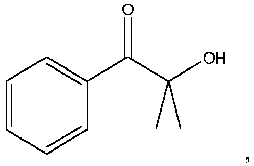 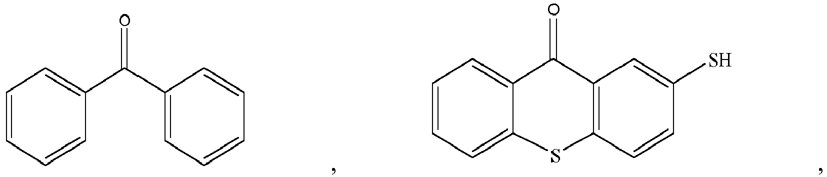 and

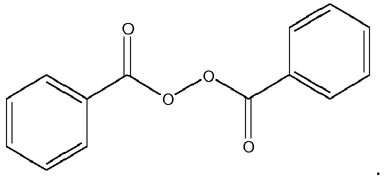

The composition may further include a second macromolecular compound formed by a condensation polymerization reaction of the dianhydride monomer represented by the Chemical Formula 1, and the diamine monomer represented by the Chemical Formula 2.

A first electrode may be formed on the first substrate and a second electrode may be formed on the second substrate. A voltage may be applied to the first electrode and the second electrode prior to exposing the first substrate to light.

The first substrate may include a display area and a peripheral area surrounding the display area. A sealing member may be formed on the alignment layer. The sealing member may be disposed on a border between the display area and the peripheral area.

The liquid crystal layer may further include the reactive mesogen. An amount of the reactive mesogen may be about 0.01wt% to about 0.5wt% based on a total weight of the liquid crystal layer.

The composition for aligning includes a reactive mesogen, so that the reactive mesogen is not included in a liquid crystal layer. A ratio of a photo reactive group of the macromolecular compound is controlled, so that a cross linkage formed by a reaction of the macromolecular compound and the photo reactive group may be improved. Therefore, a mechanical strength of the alignment layer may be increased, and an after image of a screen may be improved.

### BRIEF DESCRIPTION OF THE DRAWINGS

The above and other features of the inventive concept will become more apparent by describing in detaile example embodiments thereof with reference to the accompanying drawings, in which:
FIG. 1 is a plan view illustrating an example embodiment of a display panel;
FIG. 2 is a cross-sectional view illustrating an example embodiment of a display panel; and
FIGS. 3A to 3H are cross-sectional views illustrating an example embodiment of a method of manufacturing a display panel.

### DETAILED DESCRIPTION OF THE INVENTIVE CONCEPT

Hereinafter, example embodiments of the inventive concept will be explained in detail with reference to the accompanying drawings.

A problem with the composition for aligning which includes a reactive mesogen as a side chain of the composition described in the Background section above is that each functional group includes only one photo reactive group, so that a cross linkage formed by a reaction of adjacent photo reactive groups may be weaker than a cross linkage formed by a reaction of a photo reactive group, and a reactive mesogen, which is included in the liquid crystal layer. In addition, the functional group includes a flexible alkyl group, so that a mechanical strength may be poor, and an afterimage may occur on a screen.

### A composition for aligning

Embodiments of the composition for aligning disclosed herein include a first macromolecular compound, a second macromolecular compound and a reactive mesogen.

The first macromolecular compound is formed by a condensation reaction of a dianhydride monomer and a diamine monomer. The dianhydride monomer is represented by the following Chemical Formula 1. The diamine monomer is represented by at least one of the following Chemical Formula 2 and the following Chemical Formula 3. A molar ratio of the dianhydride monomer and the diamine monomer is 1:1.

The second macromolecular compound is formed by a condensation reaction of a dianhydride monomer and a diamine monomer. The dianhydride monomer is represented by the following Chemical Formula 1. The diamine monomer is represented by the following Chemical Formula 2. A molar ratio of the dianhydride monomer and the diamine monomer is 1:1.

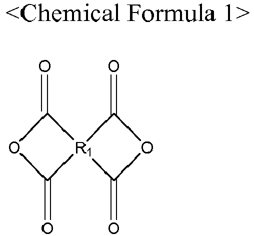

### <Chemical Formula 2>

D-R3

### <Chemical Formula 3>

D-R4

R1 includes 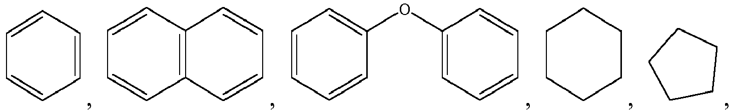 and

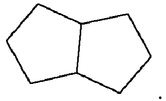

D is a diamine including an alkyl group having 2 to 20 carbon atoms, 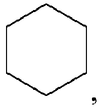 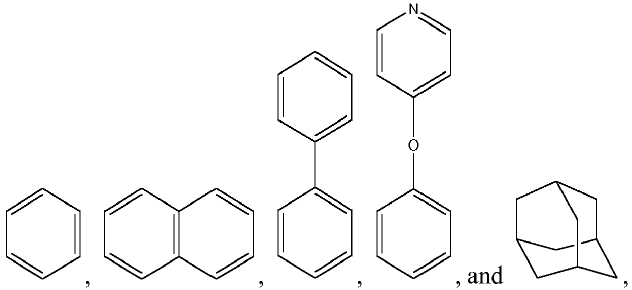 and at least two carbon atoms of D are substituted by nitrogen atoms.

R3 is -X-L1. X includes 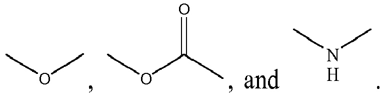 L1 includes a single bond, an alkyl group having 1 to 20 carbon atoms,

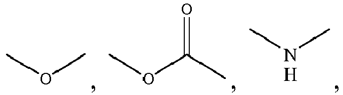

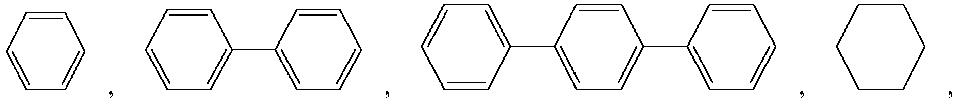

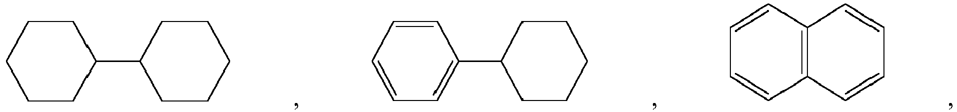

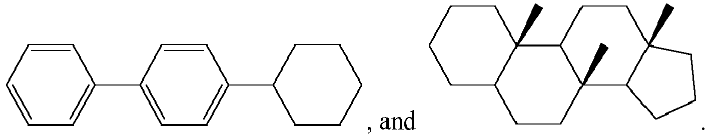

R4 is -X-L2. L2 includes 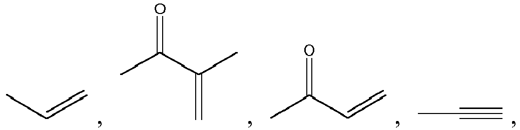 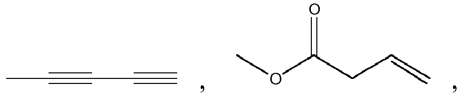 an epoxy group,

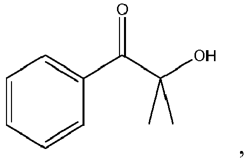

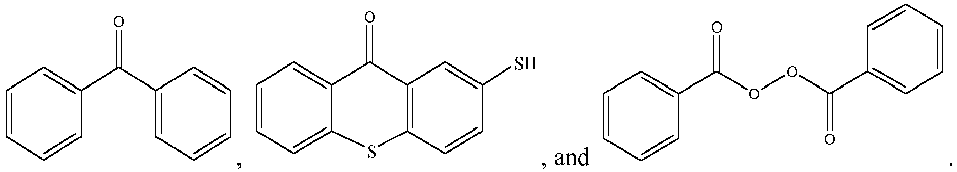

For example, the diamine monomer may include a vertical aligning diamine monomer represented by the Chemical Formula 2 and a photo reactive diamine monomer represented by the Chemical Formula 3. For example, a molar ratio of the vertical aligning diamine monomer and the photo reactive diamine monomer may be about 7:3 to about 3:7.

For example, an amount of photo reactive monomer may be about 15mol% to about 35mol% based on a total mol% of the entire composition for aligning forming the first macromolecular compound.

For example, a molar ratio of the first macromolecular compound and the second macromolecular compound is about 6:4 to about 8:2. For example, an amount of the first macromolecular compound may be about 60mol% to about 80mol% based on a total mol% of the first macromolecular compound and the second macromolecular compound. When an amount of the first macromolecular compound is less than 60mol% based on a total mol% of the first macromolecular compound and the second macromolecular compound, a content of a photo reactive group is too low, so that a reaction rate of the photo reactive group and the reactive mesogen is low, thus a pretilt of a liquid crystal is hard to control. When an amount of the first macromolecular compound is more than 80mol% based on a total mol% of the first macromolecular compound and the second macromolecular compound, a content of a photo reactive group is too high, so that an electrical polarization increases, thus an electrical characteristic of the alignment layer is poor.

An amount of the reactive mesogen is about 1wt% to about 20wt% based on a total weight of the first macromolecular compound and the second macromolecular compound.

The reactive mesogen is represented by the following Chemical Formula 4.

### <Chemical Formula 4>

M2-M1-M3

M1 includes

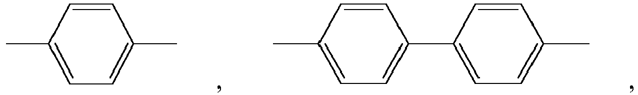

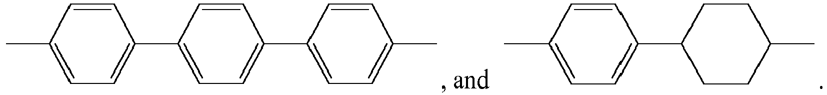

M2 includes

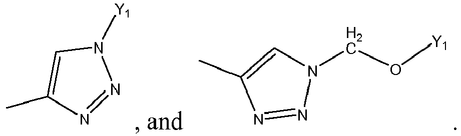

M3 includes 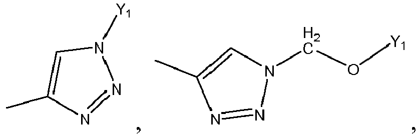 -O-Y2, and -O-(CH2)a-Y2. a is 1 to 20.

Y1 and Y2 includes the photo reactive group. For example, Y1 and Y2 respectively includes 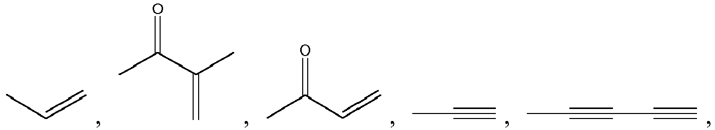 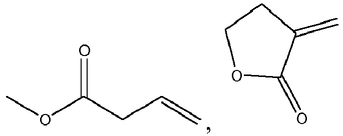 and an epoxy group.

A display panel and a method for manufacturing the display panel

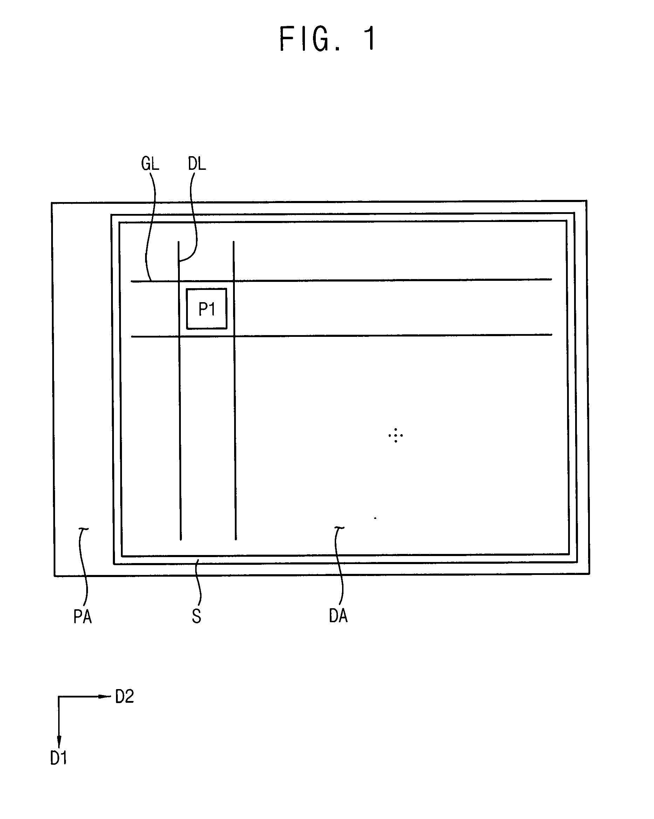

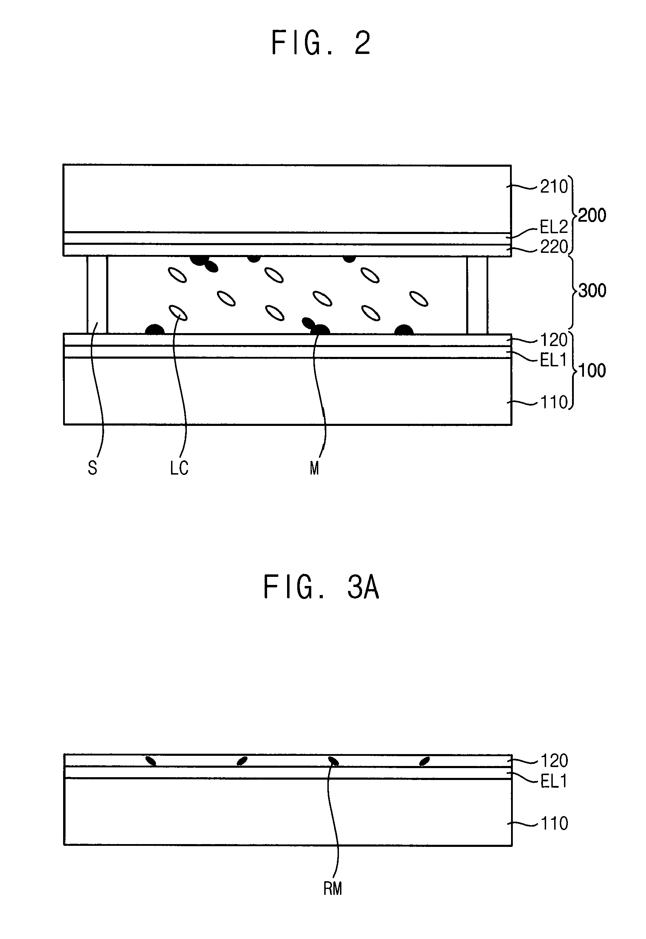

FIG. 1 is a plan view illustrating an example embodiment of a display panel. FIG. 2 is a cross-sectional view illustrating an example embodiment of a display panel.

Referring to FIGS. 1 and 2, the display panel includes a plurality of gate lines GL, a plurality of data lines DL and a plurality of pixels.

The gate lines GL may extend in a first direction D1. The data lines DL may extend in a second direction D2, which is substantially crossing the first direction D1. Alternatively, the gate lines GL may extend in the second direction D2, the data lines DL may extend in the first direction D1.

The pixels may be arranged in a matrix shape. The pixels may be disposed in areas defined by the gate lines GL and the data lines DL, such as pixel P1.

Each pixel may be connected to a corresponding gate line GL and a corresponding data line DL adjacent to the pixel.

Each pixel may have a rectangle shape extending in the second direction D2, a V-shape, a Z-shape or the like.

The display panel includes a display area DA displaying an image and a peripheral area PA surrounding the display area DA. A sealing member S may be disposed on a border between the display area DA and the peripheral area PA.

Referring to FIGS. 1 and 2, the display panel includes an array substrate 100, an opposite substrate 200, a liquid crystal layer 300 and a sealing member S.

The array substrate 100 may include a first substrate 110, a first electrode EL1, a first alignment layer 120 and a mesogen M.

The first substrate 110 may be a transparent insulation substrate. For example, the transparent insulation substrate may be a glass substrate, a plastic substrate or the like. The first substrate 110 may include a plurality of pixel areas for displaying an image. A plurality of the pixel areas may be disposed in a matrix shape having a plurality of rows and a plurality of columns.

The first electrode EL1 may be disposed on the first substrate 110. For example, the first electrode EL1 may include a transparent conductive material, such as indium tin oxide (ITO), indium zinc oxide (IZO) and aluminum-doped zinc oxide (AZO). For example, the first electrode EL1 may have a slit pattern.

The first alignment layer 120 may be disposed on the first electrode EL1.

The opposite substrate 200 may include a second substrate 210, a second electrode EL2, a second alignment layer 220 and a mesogen M.

The second substrate 210 may be a transparent insulation substrate. For example, the transparent insulation substrate may be a glass substrate, a plastic substrate or the like. The second substrate 210 may include a plurality of pixel areas for displaying an image. A plurality of the pixel areas may be disposed in a matrix shape having a plurality of rows and a plurality of columns.

The second electrode EL2 may be disposed on the second substrate 210. For example, the second electrode EL2 may include a transparent conductive material, such as indium tin oxide (ITO), indium zinc oxide (IZO) and aluminum-doped zinc oxide (AZO). For example, the second electrode EL2 may have a slit pattern.

The second alignment layer 220 may be disposed on the second electrode EL2.

The first macromolecular compound includes a first repeat unit represented by the following Chemical Formula 5 and a second repeat unit represented by the following Chemical Formula 6.

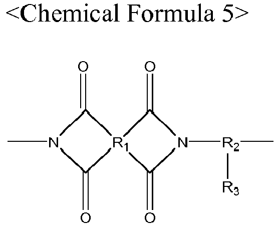

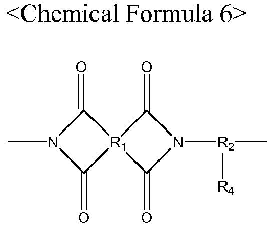

R1 includes 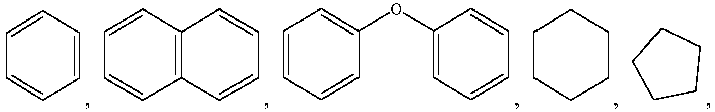 and

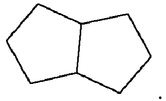

R2 includes an alkyl group having 1 to 20 carbon atoms,

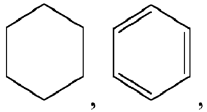

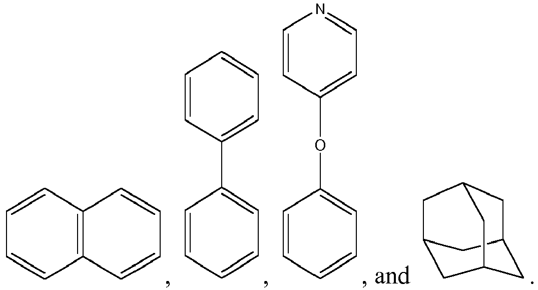

R3 is -X-L1. X includes 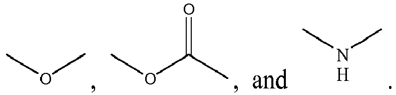 L1 includes a single bond, an alkyl group having 1 to 20 carbon atoms,

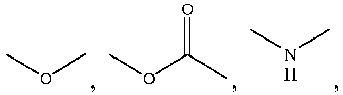

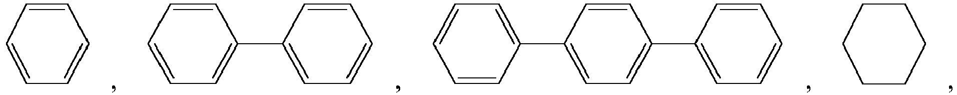

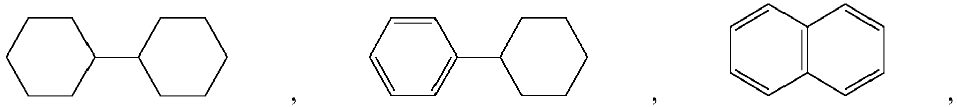

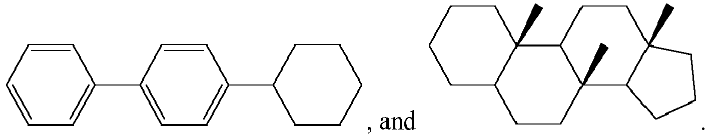

R4 is -X-L2. L2 includes 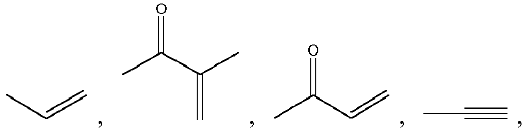 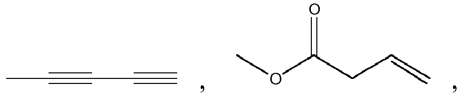 an epoxy group,

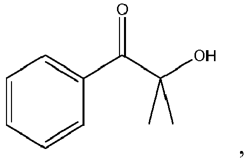

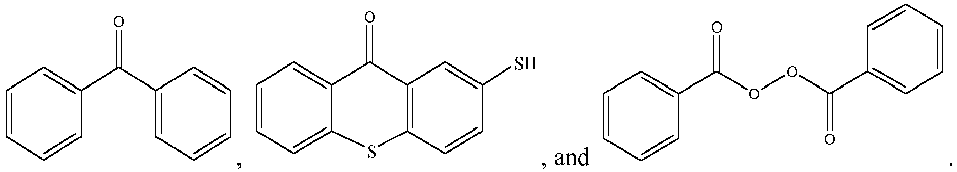

For example, L1 may be a vertical aligning group, R3 may be a side chain including the vertical aligning group. For example, L2 may be a photo reactive group, R4 may be a side chain including the photo reactive group.

A weight-average molecular weight of the first macromolecular compound may be about 1,000 to about 10,000,000. The weight-average molecular weight of the first macromolecular compound may be obtained by controlling the number of the repeat unit.

For example, the first macromolecule compound may be represented by the following Chemical Formula 1-1.

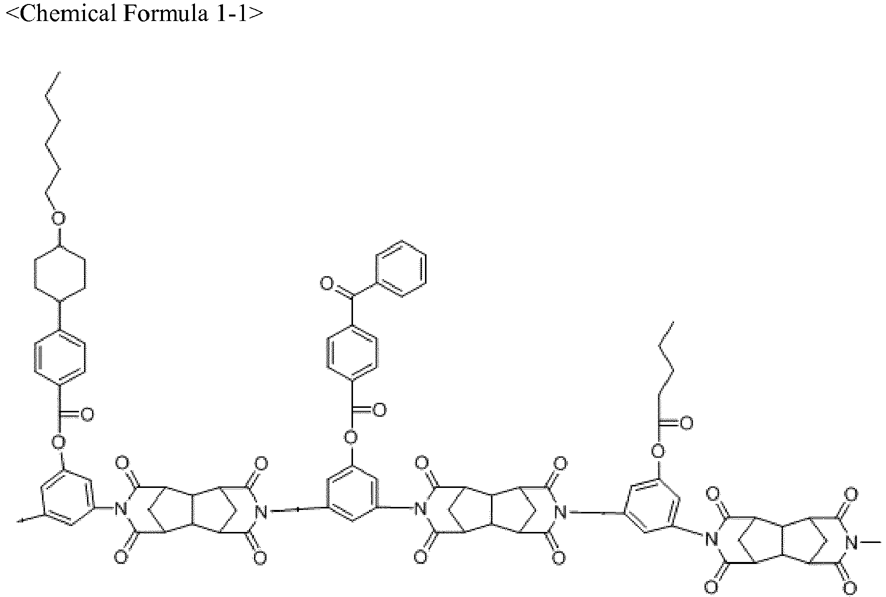

The second macromolecular compound may include the first repeat unit represented by the Chemical Formula 5.

A weight-average molecular weight of the second macromolecular compound may be about 1,000 to about 10,000,000. The weight-average molecular weight of the second macromolecular compound may be obtained by control the number of the repeat unit.

For example, the second macromolecule compound may be represented by the following Chemical Formula 2-1.

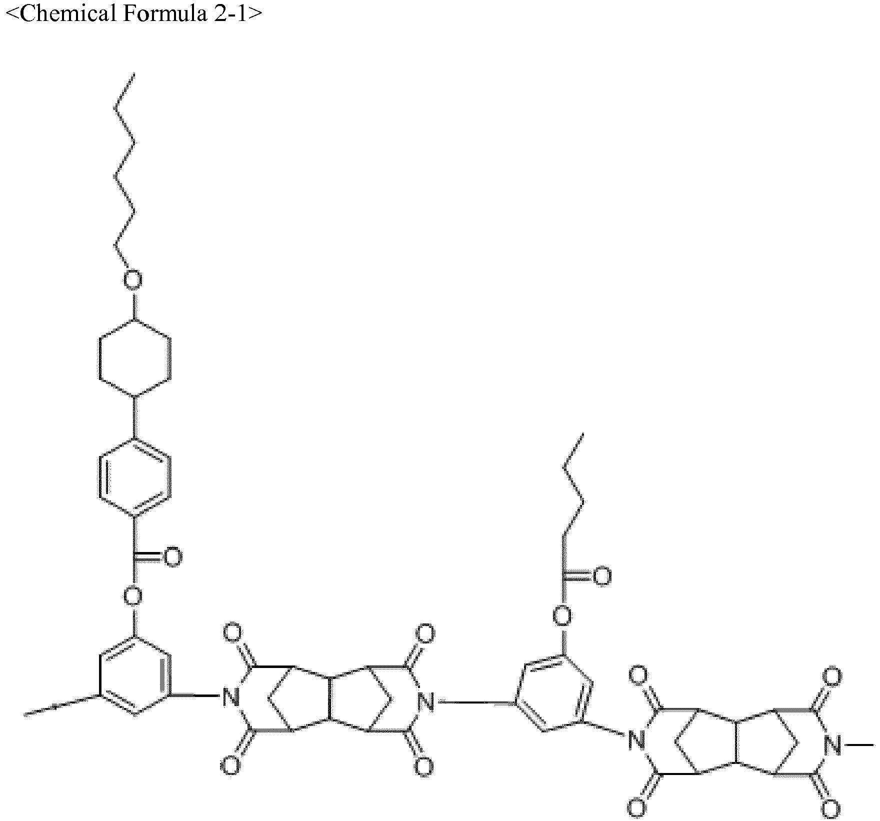

The first macromolecular compound includes the first repeat unit and the second repeat unit, and a molar ratio of the first repeat unit and the second repeat unit may be about 7:3 to about 3:7.

When the molar ratio of the first repeat unit and the second repeat unit is outside of a range of about 7:3 to about 3:7, the mesogen M is barely formed on a whole surface of the first alignment layer 120 and the second alignment layer 220.

For example, the second repeat unit including an amount of the photo reactive group may be 30mol% to about 70mol% based on a total mol% of a repeat unit of the first macromolecular compound.

When an amount of the second repeat unit is less than 30mol% based on a total mol% of a repeat unit of the first macromolecular compound, a content of a photo reactive group is too low, so that the mesogen M is barely combined with the photo reactive group, thus a pretilt of a liquid crystal LC is difficult to control. When an amount of the second repeat unit is more than 70mol% based on a total repeat unit of the first macromolecular compound, a content of a photo reactive group is too high, so that a size of the mesogen M combined with the photo reactive group may be too small, thus a pretilt of a liquid crystal LC is hard to control.

A molar ratio of the first repeat unit and the second repeat unit may be obtained by controlling a molar ratio of the diamines during polymerizing the first macromolecular compound.

The alignment layers 120, 220 may includes the first macromolecular compound and the second macromolecular compound, and a molar ratio of the first macromolecular compound and the second macromolecular compound is about 6:4 to about 8:2. For example, an amount of the first macromolecular compound may be about 60mol% to about 80mol% based on a total mol% of the first macromolecular compound and the second macromolecular compound. When an amount of the first macromolecular compound is less than 60mol% based on a total mol% of the first macromolecular compound and the second macromolecular compound, a content of a photo reactive group is too low, so that the mesogen M is barely combined with the photo reactive group, thus a pretilt of a liquid crystal LC is difficult to control. When an amount of the first macromolecular compound is more than 80mol% based on a total mol% of the first macromolecular compound and the second macromolecular compound, a content of a photo reactive group is too high, so that an electrical polarization increases, thus an electrical characteristic of the alignment layer is poor.

It is not illustrated in the figures, the alignment layers 120, 220 may include a lower alignment layer and an upper alignment layer.

The lower alignment layer may be disposed on a surface of the first substrate 110 or a surface of the second substrate 120. The upper alignment layer may be disposed on the lower alignment layer.

A molar ratio of the second macromolecular compound of the lower alignment layer may be greater than a molar ratio of the first macromolecular compound of the lower alignment layer. A molar ratio of the first macromolecular compound of the upper alignment layer may be greater than a molar ratio of the second macromolecular compound of the lower alignment layer.

Generally, the first substrate 110 and the second substrate 210 are hydrophilic, the first macromolecular compound is hydrophobic, and the second macromolecular compound is hydrophilic. Therefore, the first macromolecular compound is mainly disposed on the upper alignment layer which is adjacent to an upper surface of each of the alignment layers 120, 220, (i.e., the surface near the liquid crystal layer 300 and away from the substrate 110, 210) the second macromolecular compound is mainly disposed on the lower alignment layer (i.e., the portion of the alignment layer closer to the surface of the respective substrate 110, 210 than to the liquid crystal layer 300).

The mesogen M may be disposed on the first alignment layer 120 and the second alignment layer 220. The reactive mesogen may be combined with the second repeat unit thus forming the mesogen M.

The reactive mesogen may react with the photo reactive group of the first macromolecular compound thus forming the mesogen M. Therefore, a protrusion may be formed on a surface of the alignment layers 120, 220.

The photo reactive group or the mesogen M combined with each other may be arranged with a pretilt angle to the first substrate 110 and the second substrate 210.

The mesogen may be represented by the following Chemical Formula 7.

### <Chemical Formula 7>

M2-M1-M3

M1 includes

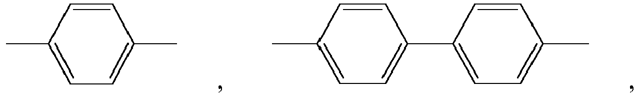

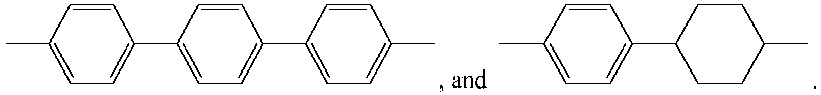

A hydrogen atom of the benzene ring of M1 may be substituted by an alkyl group having 1 to 20 carbon atoms, an alkoxy group having 1 to 20 carbon atoms, a fluorine, a bromine, an iodine, an amine group and a cyano group.

M2 includes

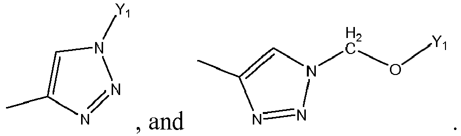

M3 includes 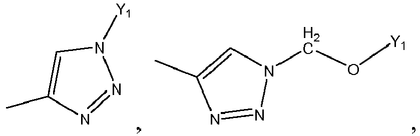 -O-Y2, and -O-(CH2)a-Y2. a is 1 to 20.

Y1 and Y2 include a photo reactive group. Y1 and Y2 respectively include 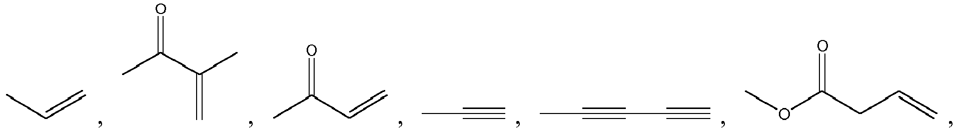 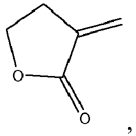 and an epoxy group.

For example, Y1, Y2 and adjacent R4s are may be combined with each other. Therefore, the mesogen M may be formed.

The alignment layers 120, 220 may include a third macromolecular compound and a fourth macromolecular compound.

The third macromolecular compound may include a third repeat unit represented by the following Chemical Formula 8 and a fourth repeat unit represented by the following Chemical Formula 9. The fourth macromolecular compound may include the third repeat unit.

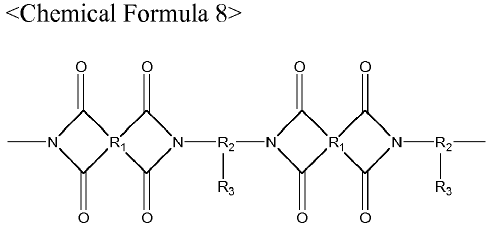

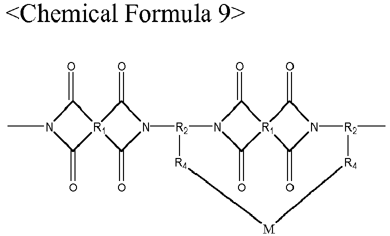

For example, M is M2-M1-M3. M2, M3 and adjacent R4s may react, thus combining with each other.

The liquid crystal layer 300 may be disposed between the array substrate 100 and the opposite substrate 200.

For example, the liquid crystal layer 300 may include a liquid crystal LC. An alignment of the liquid crystal LC may be controlled by an electric field applied between the first electrode EL1 and the second electrode EL2. Therefore, a light transmittance of the pixel may be controlled.

For example, the liquid crystal LC may be vertically aligned with respect to the first substrate 110 and the second substrate 210.

The sealing member S may surround a side surface of the liquid crystal layer 300. Therefore, the sealing member S may prevent the liquid crystal LC of the liquid crystal layer 300 from overflowing.

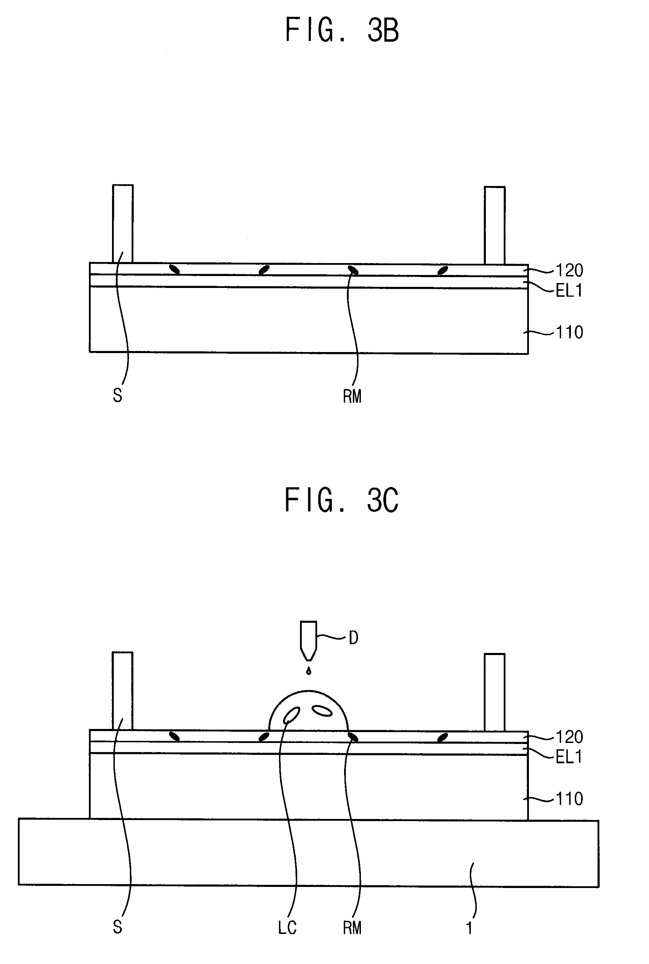

FIGS. 3a to 3h are cross-sectional views illustrating an example embodiment of a method of manufacturing a display panel.

Referring to FIGS. 2 and 3a, a first substrate 110 is provided, a first electrode EL1 is formed on the first substrate 110.

A composition for aligning may be coated on the first substrate 110 thus forming a first alignment layer 120.

For example, the composition for aligning may include a first macromolecular compound, a second macromolecular compound and a reactive mesogen RM.

The first macromolecular compound, the second macromolecular compound and the reactive mesogen RM of the composition for aligning is substantially the same as the compound described with respect to FIG. 2. The same reference names will be used to refer to the same or like compounds as those described in the previous example embodiment in FIG. 2 and any further repetitive explanation concerning the above elements will be omitted.

Referring to FIGS. 1 to 3b, the first substrate 110 includes a display area DA and a peripheral area PA surrounding the display area DA. A sealing member S may be disposed on a border between the display area DA and the peripheral area PA.

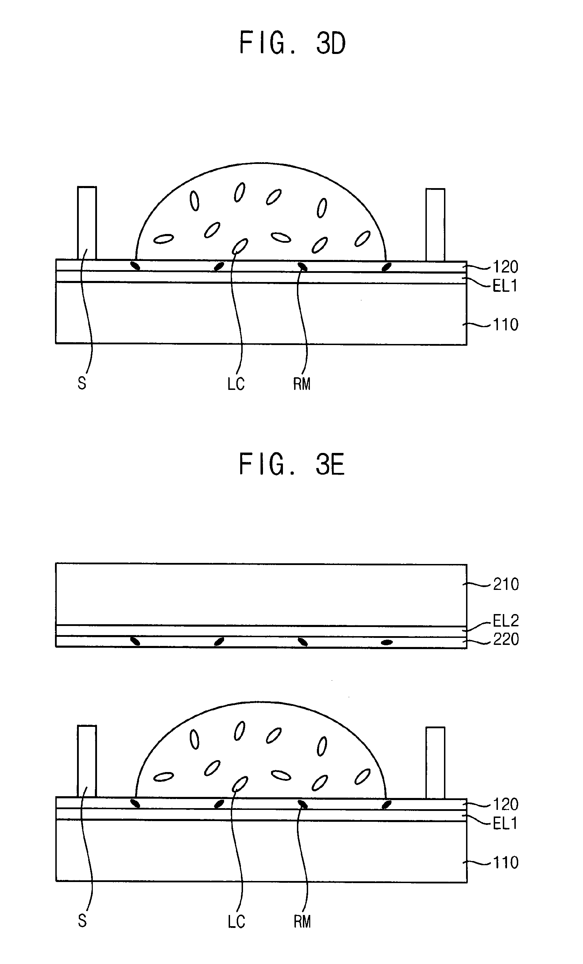

Referring to FIGS. 3c and 3d, a liquid crystal LC may be dropped on the first alignment layer 120 using a liquid crystal dispenser D. For example, the liquid crystal LC may be dropped through ODF (one drop filling) process. Thus, a process time, production ability may be improved.

The liquid crystal LC may be dotted on the first alignment layer 120. Either the liquid crystal dispenser D or a stage 1, which is under the first substrate 110, (or both) may be moved, so that a desired amount of the liquid crystal LC may be dropped on the first alignment layer 120.

The liquid crystal layer 300 may, for example, further include the reactive mesogen RM (not shown in FIG. 3d). An amount of the reactive mesogen may be about 0.01wt% to about 0.5wt% based on a total weight of the liquid crystal layer 300.

Referring to FIG. 3e, a second substrate 210 is provided to face the first substrate 110, that the liquid crystal LC is dropped on the first substrate 110 through the ODF process.

A second electrode EL2 is formed on the second substrate 210. A second alignment layer 220 may be formed on the second substrate 210. The second alignment layer 220 may include a same material as the first alignment layer 120. Alternatively, one of the first alignment layer 120 on the first substrate 110 or the second alignment layer 220 on the second substrate 210 may be formed.

A liquid crystal layer 300 may be formed by combining the first substrate 110 and the second substrate 210. The liquid crystal layer 300 may be encapsulated by the sealing member S, the sealing member S may surround the liquid crystal layer 300.

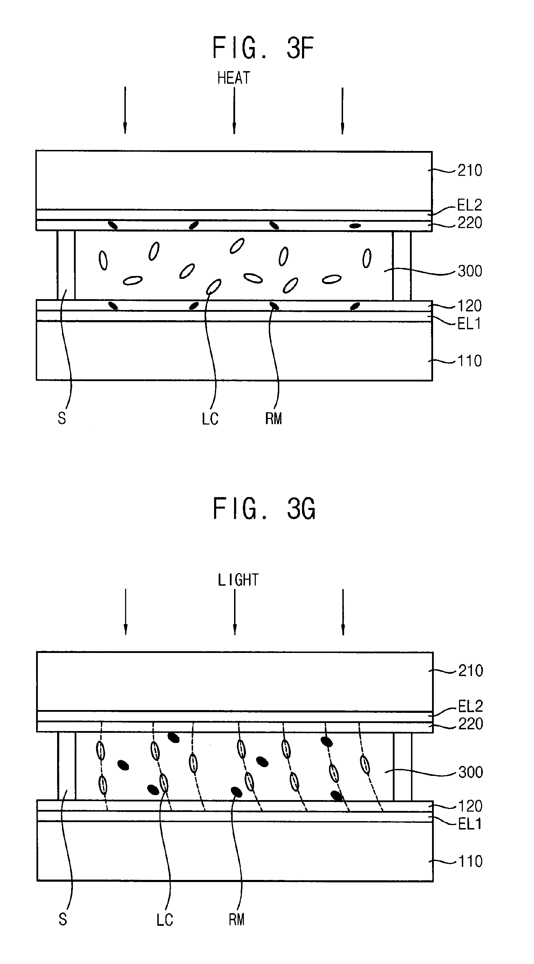

Referring to FIG. 3f, the first substrate 110 and the second substrate 210 combined with each other may be heated. Thus, the first alignment layer 120 and the second alignment layer 220 may be hardened.

When the first alignment layer 120 and the second alignment layer 220 are heated, the reactive mesogen RM in the first alignment layer 120 and the second alignment layer 220 may be released into the liquid crystal layer 300 The reactive mesogen RM has a different property with the first macromolecular compound and the second macromolecular compound, so that a phase separation may occur between the reactive mesogen RM, and the first macromolecular compound and the second macromolecular compound. Thus, the reactive mesogen RM may be released into the liquid crystal layer 300.

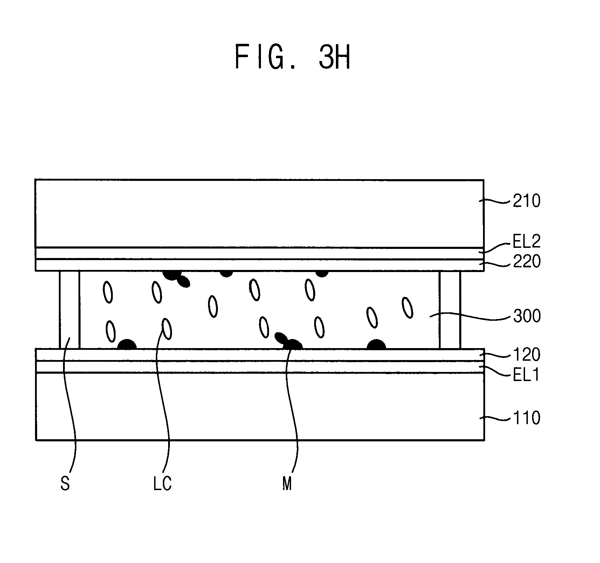

Referring to FIGS. 3g and 3h, the first substrate 110 and the second substrate 210 may be exposed to light, so that the photo reactive group of the first macromolecular compound and the reactive mesogen RM may react.

The light irradiated into the first substrate 110 and the second substrate 210 may be ultraviolet. For example, the light irradiated may be equal to or more than 10J/cm².

A voltage may be applied to the first electrode EL1 and the second electrode EL2 prior to exposing the first substrate 110 and the second substrate 210 to light. Therefore, an electric field may be formed in the liquid crystal layer 300. For example, the voltage may be about 10V to about 30V

When the voltage is applied, the liquid crystal LC in the liquid crystal layer 300 may be arranged with a pretilt angle to the first substrate 110 and the second substrate 210. The pretilt angle to the first substrate 110 and the second substrate 210 may be about 85° to about 89°.

When the alignment layers 120, 220 are exposed to light, a reaction may occur between adjacent photo reactive groups or between the photo reactive group and the reactive mesogen RM. Thus, the photo reactive group and the reactive mesogen RM may be combined to form the mesogen M. Therefore, when the alignment layers 120, 200 are exposed to light while voltage is applied to the first electrode EL1 and second electrode EL2, the mesogen M may be arranged with a pretilt angle to the first substrate 110 and the second substrate 210.

Although not illustrated in the figures, after an exposing process of the alignment layers 120, 220, the first substrate 110 and the second substrate 210 may be repeatedly exposed to light for removing a remainder reactive mesogen RM in the liquid crystal layer 300. However, an electric field may be not formed in the liquid crystal layer 300 during such a repeated exposure.

According to an example embodiment, a composition for aligning, a display panel, and a method of manufacturing a display panel using the composition for aligning may be used for a display apparatus or the like.

## Claims

1. A composition for aligning comprising:
a first macromolecular compound formed by a condensation polymerization reaction of a dianhydride monomer represented by the following Chemical Formula 1, and a diamine monomer represented by at least one of the following Chemical Formula 2 and the following Chemical Formula 3, and
a reactive mesogen, 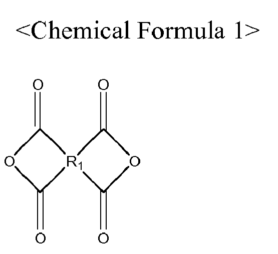
<Chemical Formula 2> D-R3 <Chemical Formula 3> D-R4
wherein R1 comprises at least one selected from the group consisting of 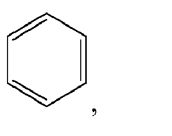 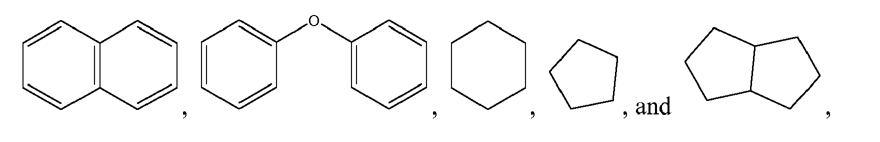 wherein D is a diamine comprising at least one selected from the group consisting of
an alkyl group having 2 to 20 carbon atoms, 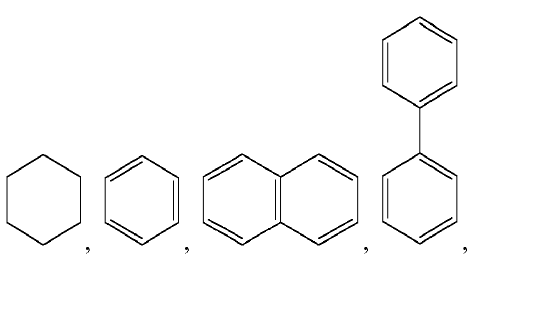 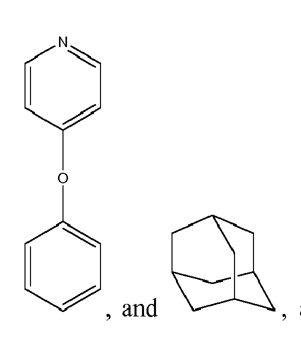 and at least two carbon atoms of D are substituted by nitrogen atoms,
wherein R3 is -X-L1, X comprises at least one selected from the group consisting of 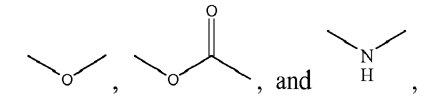 L1 comprises at least one selected from the group consisting of a single bond, an alkyl group having 1 to 20 carbon atoms, 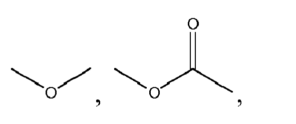 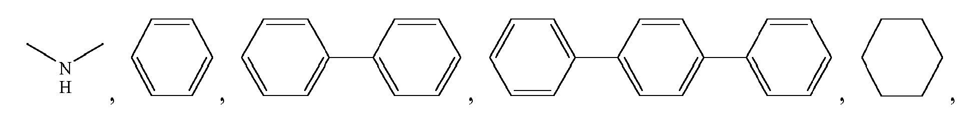 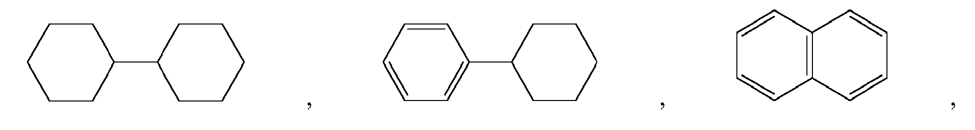 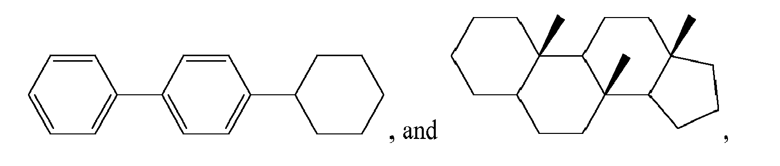
wherein R4 is -X-L2, L2 comprises at least one selected from the group consisting of 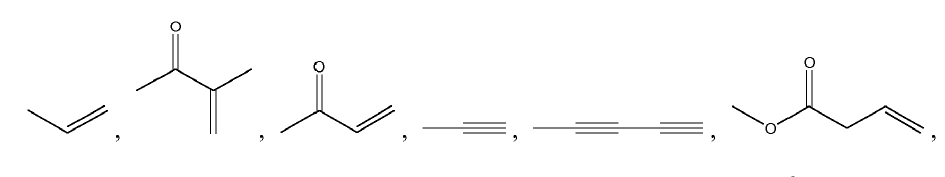 an epoxy group, 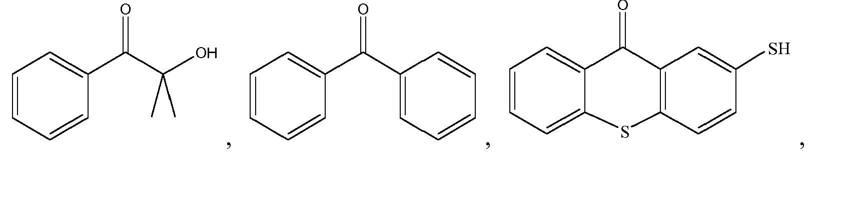 and

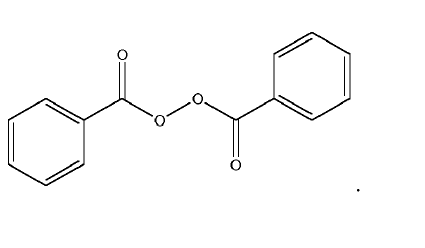

2. The composition of claim 1, wherein the first macromolecular compound is formed by a condensation polymerization reaction of the dianhydride monomer, and the diamine monomer, the diamine monomer comprises a vertical aligning diamine monomer represented by the Chemical Formula 2 and a photo reactive diamine monomer represented by the Chemical Formula 3, and
wherein, a molar ratio of the vertical aligning diamine monomer and the photo reactive diamine monomer is about 7:3 to about 3:7.

3. The composition of claim 2, wherein an amount of the photo reactive monomer is about 15mol% to about 35mol% based on a total mol forming the first macromolecular compound.

4. The composition of claim 1, further comprising:
a second macromolecular compound formed by a condensation polymerization reaction of the dianhydride monomer represented by the Chemical Formula 1, and the diamine monomer represented by the Chemical Formula 2.

5. The composition of claim 4, wherein a molar ratio of the first macromolecular compound and the second macromolecular compound is about 6:4 to about 8:2.

6. A display panel comprising:
a first substrate and a second substrate facing the first substrate;
an alignment layer disposed on at least one surface of the first substrate and the second substrate, the alignment layer comprising a first macromolecular compound comprising a first repeat unit represented by the following Chemical Formula 5 and a second repeat unit represented by the following Chemical Formula 6;
a mesogen disposed on the alignment layer, and combined with the second repeat unit; and
a liquid crystal layer disposed between the first substrate and the second substrate, 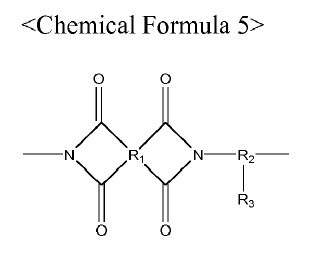 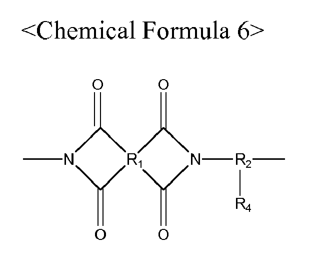
wherein R1 comprises at least one selected from the group consisting of 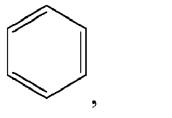 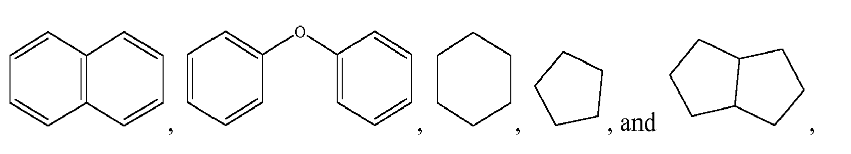 wherein R2 comprises at least one selected from the group consisting of an alkyl group having 1 to 20 carbon atoms, 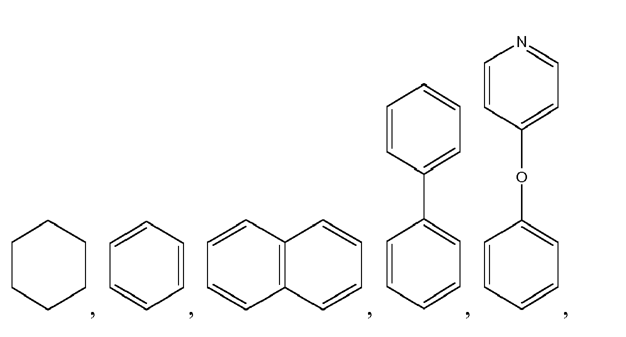 and 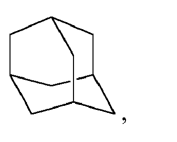
wherein R3 is -X-L1, X comprises at least one selected from the group consisting of 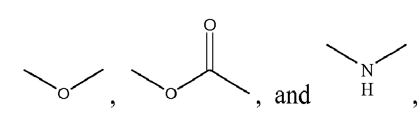 L1 comprises at least one selected from the group consisting of a single bond, an alkyl group having 1 to 20 carbon atoms, 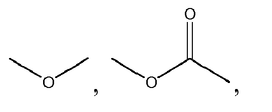 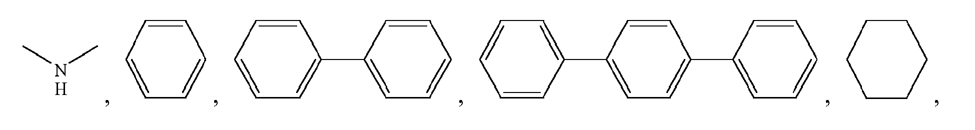 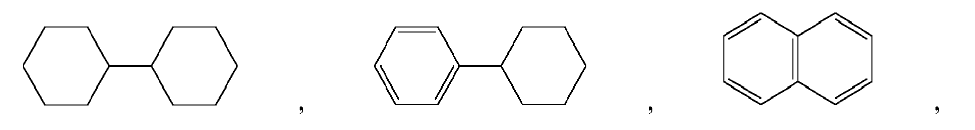 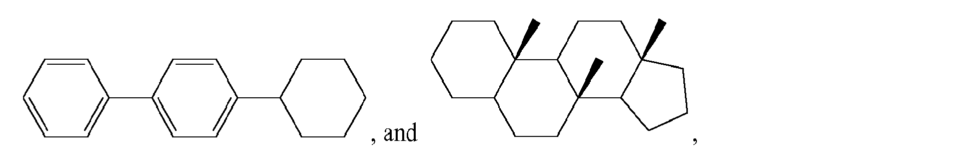
wherein R4 is -X-L2, L2 comprises at least one selected from the group consisting of 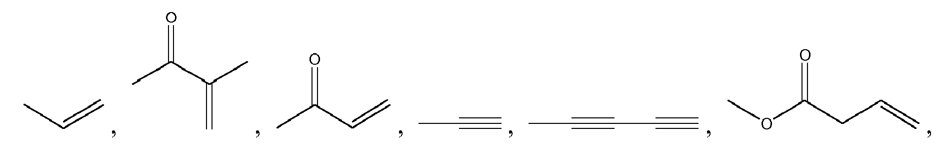 an epoxy group, 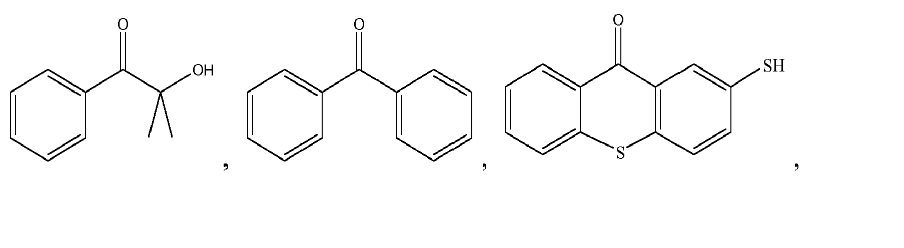 and

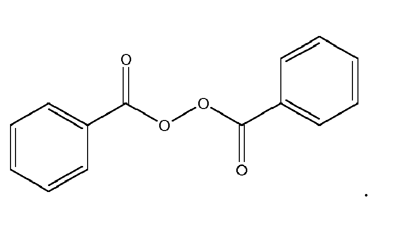

7. The display panel of claim 6, wherein a molar ratio of the first repeat unit and the second repeat unit is about 7:3 to about 3:7.

8. The display panel of claim 6, further comprising:
a second macromolecular compound comprising the first repeat unit,
wherein a molar ratio of the first macromolecular compound and the second macromolecular compound is about 6:4 to about 8:2.

9. The display panel of claim 8, wherein the alignment layer comprises a lower alignment layer disposed on at least one surface of the first substrate and the second substrate, and an upper alignment layer disposed on the lower alignment layer,
wherein a molar ratio of the second macromolecular compound of the lower alignment layer is greater than a molar ratio of the first macromolecular compound of the lower alignment layer, and
wherein a molar ratio of the first macromolecular compound of the upper alignment layer may be greater than a molar ratio of the second macromolecular compound of the lower alignment layer.

10. The display panel of claim 6, wherein the mesogen is represented by the following Chemical Formula 7,
<Chemical Formula 7>
M2-M1-M3
wherein M1 comprises at least one selected from the group consisting of 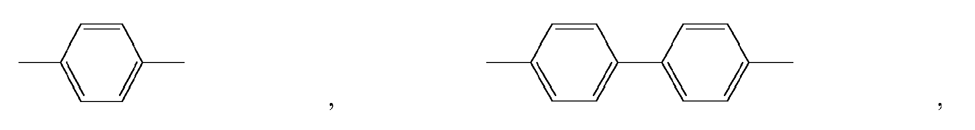 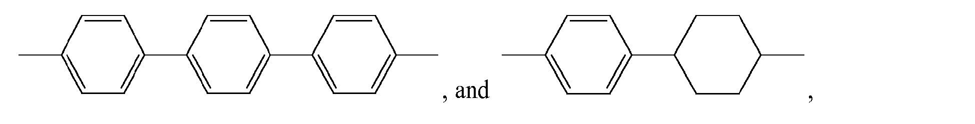 wherein M2 comprises at least one selected from the group consisting of 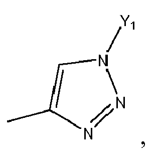 and 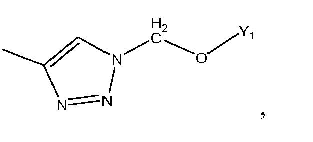 wherein M3 comprises at least one selected from the group consisting of 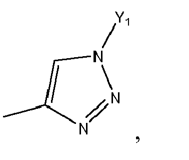 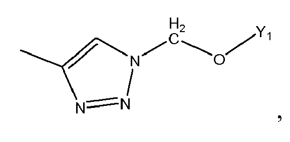 -O-Y2, and -O-(CH2)a-Y2, Y1 and Y2 respectively comprises at least one selected from the group consisting of 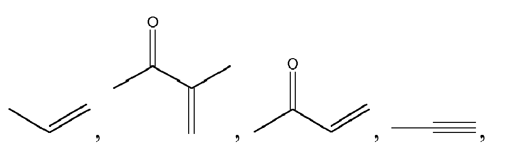 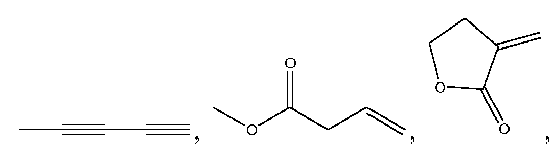 and an epoxy group, a is 1 to 20,
wherein at least one hydrogen atom of the benzene ring of M1 is substituted by an alkyl group having 1 to 20 carbon atoms, an alkoxy group having 1 to 20 carbon atoms, a fluorine, a bromine, an iodine, an amine group and a cyano group.

11. The display panel of claim 10, wherein Y1, Y2 and adjacent R4s are combined with each other.

12. The display panel of claim 6, wherein the first substrate comprises a display area and a peripheral area surrounding the display area,
further comprising:
a sealing member disposed on the alignment layer, the sealing member is disposed on a border between the display area and the peripheral area.

13. The display panel of claim 6, wherein the alignment layer comprises a first alignment layer disposed between the first substrate and the liquid crystal layer, and a second alignment layer disposed between the second substrate and the liquid crystal layer.

14. The display panel of claim 13, wherein the mesogen is arranged with a pretilt angle to the first substrate and the second substrate.

15. A display panel comprising:
a first substrate and a second substrate facing the first substrate;
an alignment layer disposed on at least one surface of the first substrate and the second substrate, the alignment layer comprising a third repeat unit represented by the following Chemical Formula 8 and a fourth repeat unit represented by the following Chemical Formula 9; and
a liquid crystal layer disposed between the first substrate and the second substrate, 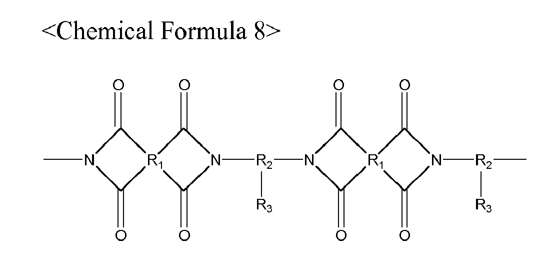 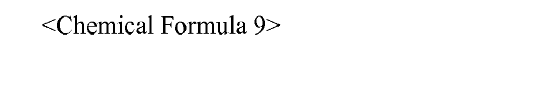 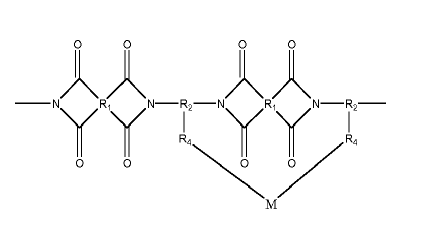
wherein R1 comprises at least one selected from the group consisting of 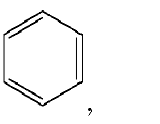 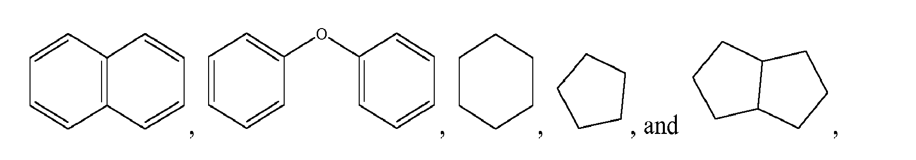 wherein R2 comprises at least one selected from the group consisting of an alkyl group having 1 to 20 carbon atoms, 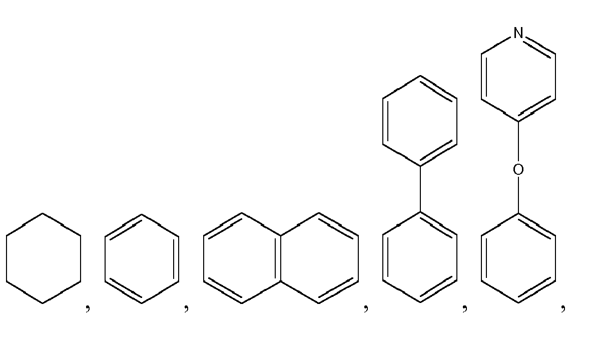 and 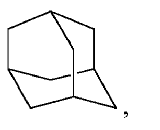
wherein R3 is -X-L1, X comprises at least one selected from the group consisting of 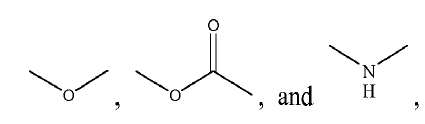 L1 comprises at least one selected from the group consisting of a single bond, an alkyl group having 1 to 20 carbon atoms, 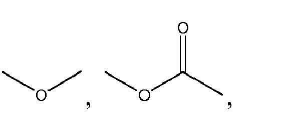 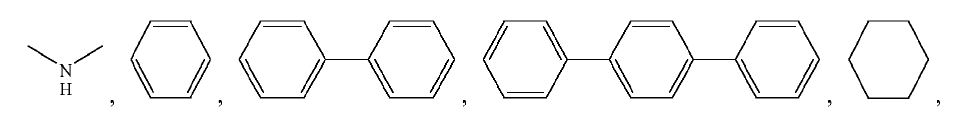 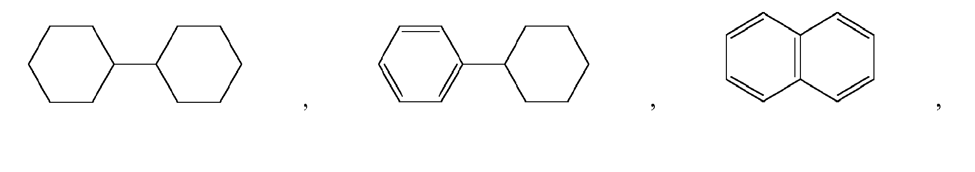 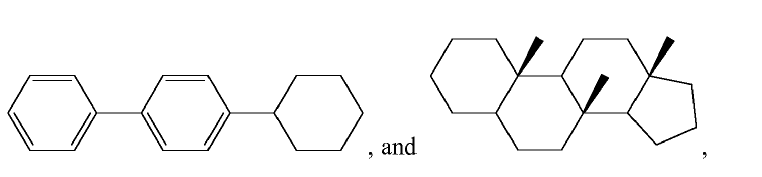
wherein R4 is -X-L2, L2 comprises at least one selected from the group consisting of 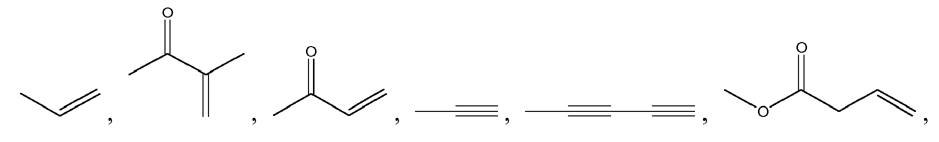 an epoxy group, 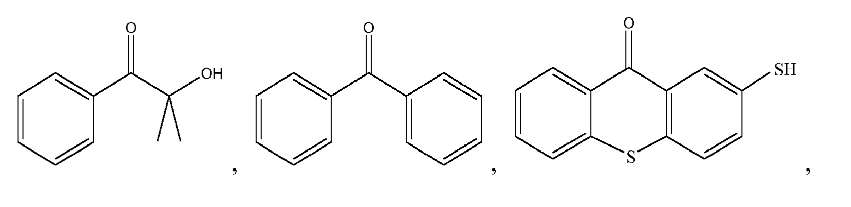 and 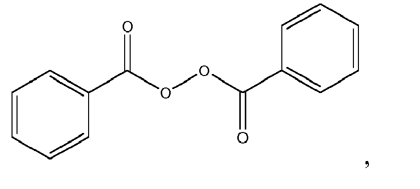
wherein M is M2-M1-M3, M1 comprises at least one selected from the group consisting of 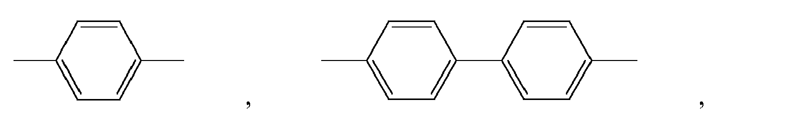 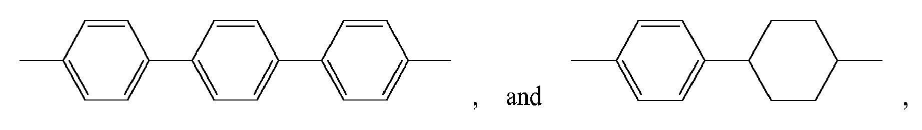 M2 comprises at least one selected from the group consisting of 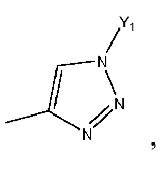 and 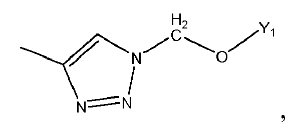 M3 comprises at least one selected from the group consisting of 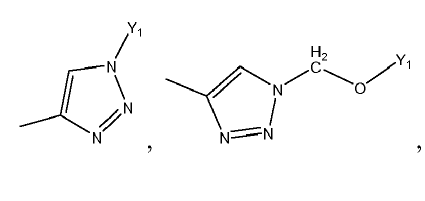 -O-Y2, and -O-(CH2)a-Y2, Y1 and Y2 respectively comprises at least one selected from the group consisting of 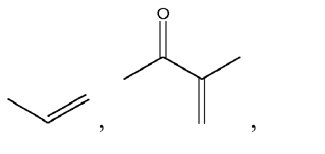 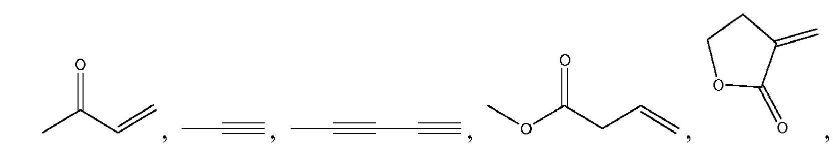 and an epoxy group, a is 1 to 20.
